(19) **Europäisches Patentamt / European Patent Office / Office européen des brevets**

(11) **EP 3 692 764 B1**

(12) **FASCICULE DE BREVET EUROPEEN**

(45) Date de publication et mention de la délivrance du brevet:
**29.09.2021 Bulletin 2021/39**

(21) Numéro de dépôt: **18780121.2**

(22) Date de dépôt: **03.10.2018**

(51) Int Cl.:
*H04L 5/14* (2006.01)  *H04L 27/26* (2006.01)

(86) Numéro de dépôt international:
**PCT/EP2018/076892**

(87) Numéro de publication internationale:
**WO 2019/068750 (11.04.2019 Gazette 2019/15)**

(54) **PROCÉDÉ DE DÉTERMINATION DE MOTS BINAIRES CONSTITUANT UN PRÉAMBULE**

VERFAHREN ZUR BESTIMMUNG BINÄRER WÖRTER, DIE EINE PRÄAMBEL BILDEN

METHOD FOR DETERMINING BINARY WORDS FORMING A PREAMBLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.10.2017 FR 1759301**

(43) Date de publication de la demande:
**12.08.2020 Bulletin 2020/33**

(73) Titulaire: **Delta Dore**
**35270 Bonnemain (FR)**

(72) Inventeurs:
• **BRIOLLE DIT BRIONNE, Philippe**
**35270 Bonnemain (FR)**
• **LEDUC, Benoît**
**35270 Bonnemain (FR)**
• **LE FERRAND, Vincent**
**35270 Bonnemain (FR)**
• **PERRAUD, Xavier**
**35270 Bonnemain (FR)**

(74) Mandataire: **Cabinet Le Guen Maillet**
**3, impasse de la Vigie**
**CS 71840**
**35418 Saint-Malo Cedex (FR)**

(56) Documents cités:
EP-A1- 3 016 290    EP-A2- 2 043 400
WO-A1-2009/078785    US-A1- 2007 248 114
US-B2- 9 049 729

**Description**

La présente invention concerne un procédé et un dispositif de détermination de mots binaires constituant un préambule d'une trame de données émise par un dispositif centralisé vers un périphérique.

Dans les systèmes d'alarme anti intrusion, de domotique ou de gestion de la température dans un bâtiment, certains périphériques tels que des capteurs, des transmetteurs, des sirènes, des thermostats d'ambiance, ont leur alimentation électrique assurée par des piles ou des batteries qui ont une capacité limitée à fournir de l'énergie électrique. Ces périphériques utilisent le médium radio comme moyen de communication avec un dispositif centralisé. La consommation d'un module radio en énergie électrique pour l'échange de messages radio est non négligeable. Cette consommation pénalise la durée de vie des piles ou batteries des dispositifs et nécessite des changements de piles ou des recharges de batteries fréquents.

La fréquence de remplacement des piles ou des recharges gène les résidents du bâtiment.

Des solutions ont été apportées dans lesquelles le périphérique active au moins la partie réception de son module radio périodiquement et tente de détecter un préambule prédéterminé pendant une durée prédéterminée.

Si le préambule est détecté, le périphérique active la partie réception de son module radio pour recevoir les données suivant le préambule. Si le préambule n'est pas détecté, le périphérique désactive au moins la partie réception de son module radio.

Lorsque plusieurs dispositifs centralisés utilisent le même préambule et sont disposés à proximité les uns des autres, par exemple lorsque les périphériques sont disposés dans des appartements d'un immeuble, il est fort probable que des périphériques associés à un dispositif centralisé détectent des préambules émis par un autre dispositif centralisé auquel ils ne sont pas associés.

Il s'en suit alors des activations intempestives des modules radio des périphériques qui réduisent alors la durée de fonctionnement des piles ou batteries de ces périphériques.

La demande de brevet EP 2043400 divulgue un appareil et un procédé pour les communications sans fil qui prennent en charge un balayage périodique de dispositifs sans fil et le brevet US 9049729 divulgue un choix de préambule.

La présente invention a pour but de résoudre les inconvénients de l'art antérieur en proposant un procédé et un dispositif de détermination d'un préambule qui évitent que deux dispositifs centralisés n'utilisent le même préambule afin d'éviter l'apparition d'activations intempestives de modules radio de périphériques.

A cette fin, selon un premier aspect, l'invention propose un procédé de détermination de mots binaires constituant un premier préambule d'une trame de données émise par un dispositif centralisé vers un périphérique, caractérisé en ce que le dispositif centralisé exécute les étapes de :

- détection de la mise du dispositif centralisé dans un mode dit d'association,
- sélection aléatoire d'un sous-ensemble de mots binaires parmi une pluralité de sous-ensembles de mots binaires,
- sélection aléatoire dans le sous-ensemble sélectionné d'un premier et d'un second mots binaires,
- transfert d'une trame de données constituée d'un second préambule prédéterminé connu par chaque dispositif et d'au moins un paquet de données comportant au moins les premier et second mots binaires sélectionnés,
- réception d'une trame de données transférée en réponse par un périphérique et association du périphérique au dispositif centralisé,
- utilisation du premier et du second mots binaires sélectionnés pour former le premier préambule constitué de la concaténation des deux mots binaires sélectionnés pour le transfert de chaque trame de données au périphérique associé.

La présente invention concerne aussi un dispositif de détermination de mots binaires constituants un premier préambule d'une trame de données émise par un dispositif centralisé vers un périphérique, caractérisé en ce que le dispositif centralisé comporte :

- des moyens de détection de la mise du dispositif centralisé dans un mode dit d'association,
- des moyens de sélection aléatoire d'un sous-ensemble de mots binaires parmi une pluralité de sous-ensembles de mots binaires,
- des moyens de sélection aléatoire dans le sous-ensemble sélectionné d'un premier et d'un second mots binaires,
- des moyens de transfert d'une trame de données constituée d'un second préambule prédéterminé connu par chaque dispositif et d'au moins un paquet de données comportant au moins les premier et second mots binaires sélectionnés,
- des moyens de réception d'une trame de données transférée en réponse par un périphérique et association du périphérique au dispositif centralisé,
- des moyens d'utilisation du premier et du second mots binaires sélectionnés pour former un premier préambule constitué de la concaténation des deux mots binaires sélectionnés pour le transfert de chaque trame de données au périphérique associé.

Ainsi, le choix de mots qui respectent les critères d'autocorrélation, d'intercorrélation, de moyenne et de bits identiques consécutifs permet d'optimiser les performances de réception radio fréquence, le mécanisme de détection des mots, la consommation des systèmes à portée les uns des autres et la consommation intrinsèque des périphériques. De plus, l'espace mémoire nécessaire à la mémorisation des sous-ensembles de mots binaires est très limité. Selon un mode particulier de l'invention, les mots binaires de chaque groupe sont déterminés à partir d'un critère sur une valeur maximale d'autocorrélation et une valeur moyenne d'autocorrélation des mots binaires, d'un critère sur un nombre maximum de bits consécutifs des mots binaires au même niveau logique, et d'un critère sur l'intercorrélation des mots binaires.

Ainsi, les critères d'autocorrélation et d'intercorrélation permettent de minimiser les probabilités d'écoute prolongée lors des réveils effectués sur du bruit ainsi que les erreurs de synchronisation lors des réveils sur un préambule intègre. Ceci permet de diminuer la consommation des périphériques.

Selon un mode particulier de l'invention, un mot binaire est considéré comme satisfaisant au critère sur l'autocorrélation et sur la moyenne d'autocorrélation si l'autocorrélation et la moyenne d'autocorrélation sont inférieures à 6/8.

Ainsi, les critères sur l'autocorrélation permettent de minimiser les erreurs de synchronisation. Selon un mode particulier de l'invention, le critère sur le nombre consécutif de bits d'un mot binaire identiques est strictement inférieur à 4 ou à 5.

Ainsi, en minimisant le nombre de bits consécutifs identiques, la durée du réveil peut-être minimisée lors des réveils effectués sur du bruit par la détection de plusieurs bits identiques consécutifs qui ne satisfont pas au critère.

Selon un mode particulier de l'invention, un mot binaire est considéré comme satisfaisant au critère sur l'intercorrélation si l'intercorrélation est inférieure à 6/8.

Ainsi, la combinaison des deux critères permet la constitution d'ensembles de mots satisfaisant à ces derniers. Les parties de ces ensembles constitués de mots deux à deux distincts sont stables selon les critères. La constitution de ces ensembles permet la génération d'un grand nombre de préambules pour une empreinte mémoire faible.

Selon un mode particulier de l'invention, le critère sur le nombre de bits au même état logique d'un mot binaire est égal à quatre bits au même niveau ou 3, 4 ou 5 bits au même niveau.

Ainsi, en maintenant une valeur moyenne des mots proche de 0, on optimise les performances des récepteurs radio.

L'invention concerne aussi les programmes d'ordinateur stockés sur un support d'informations, lesdits programmes comportant des instructions permettant de mettre en œuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 représente un système dans lequel la présente invention est implémentée ;

la Fig. 2 représente un exemple d'architecture d'un dispositif centralisé selon la présente invention ;

la Fig. 3 représente un exemple d'algorithme de sélection d'au moins deux octets parmi un ensemble d'octets pour former un préambule ;

la Fig. 4 représente un exemple d'algorithme de génération de sous-ensembles d'octets pour la génération d'un préambule ;

la Fig. 5 représente les différents sous-ensembles obtenus par l'algorithme de la Fig. 4 selon un premier ensemble de critères ;

la Fig. 6 représente les différents sous-ensembles obtenus par l'algorithme de la Fig. 4 selon un second ensemble de critères ;

la Fig. 7 représente les différents sous-ensembles obtenus par l'algorithme de la Fig. 4 selon un troisième ensemble de critères ;

la Fig. 8 représente les différents sous-ensembles obtenus par l'algorithme de la Fig. 4 selon un quatrième ensemble de critères.

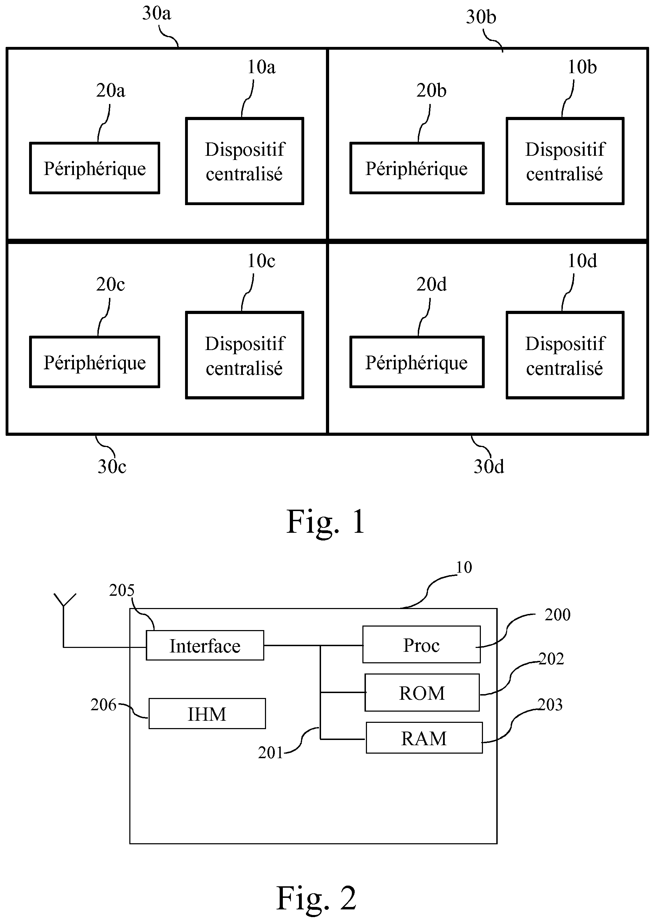

La **Fig. 1** représente un système dans lequel la présente invention est implémentée.

Le système est par exemple implémenté dans un quartier résidentiel, un bâtiment résidentiel ou tertiaire dont les logements ou les locaux sont équipés des mêmes systèmes et sont proches les uns des autres. La portée des systèmes radio utilisés dans la présente invention entraîne, en fonction de la distance entre les systèmes radio, la réception de trames de données émises par plusieurs émetteurs par un récepteur qui n'est pas destinataire de toutes les trames de données. Si le préambule est unique pour tous les systèmes radio, le récepteur prolonge le réveil jusqu'à la réception de la trame complète et ne filtre les trames de données qui lui sont adressées qu'après identification du destinataire. La consommation du récepteur en est fortement affectée. A titre d'illustration, pour deux systèmes radio qui sont à portée l'un de l'autre, la consommation due aux réveils sur des préambules pour chacun des récepteurs est multipliée par deux.

Dans la Fig. 1, quatre logements 30a, 30b, 30c et 30d sont représentés. Le logement 30a comporte un dispositif centralisé 10a et un périphérique 20a, le logement 30b comporte un dispositif centralisé 10b et un périphérique 20b, le logement 30c comporte un dispositif centralisé 10c et un périphérique 20c et le logement 30d comporte un dispositif centralisé 10d et un périphérique 20d.

Un dispositif centralisé 10 est par exemple une centrale d'alarme ou une centrale domotique ou une centrale de régulation de la température d'un bâtiment.

Un périphérique 20 est par exemple un détecteur d'ouverture ou périmétrique, un détecteur de mouvement, un clavier, un écran, un thermostat, un capteur de température, de luminosité...

Les périphériques 20 sont des dispositifs fonctionnant sur batterie et il convient d'économiser leur consommation électrique pour garantir une grande longévité de la batterie. Les dispositifs centralisés 10 émettent des trames de données qui sont reçues par les périphériques qui, si besoin, émettent une trame de données en réponse à la trame de données reçue.

Selon la présente invention, le dispositif centralisé :

- détecte la mise du dispositif centralisé dans un mode dit d'association,
- sélectionne aléatoirement un sous-ensemble de mots binaires parmi une pluralité de sous-ensembles de mots binaires,
- sélectionne aléatoirement dans le sous-ensemble sélectionné un premier et un second mots binaires,
- transfère une trame de données constituée d'un préambule prédéterminé et d'au moins un paquet de données comportant au moins le premier et le second mots binaires sélectionnés,
- reçoit une trame de données transférée en réponse par un périphérique et associe le périphérique au dispositif centralisé,
- utilise le premier et le second mots binaires sélectionnés pour former un préambule constitué de la concaténation des deux mots binaires sélectionnés pour le transfert de chaque trame de données au périphérique associé.

La **Fig. 2** représente un exemple d'architecture d'un dispositif centralisé selon la présente invention.

Le dispositif centralisé 10 selon la présente invention comprend :

- un processeur, micro-processeur, ou microcontrôleur 200 ;
- une mémoire volatile 203 ;
- une mémoire non volatile 202;
- un module radio 205 bidirectionnel ;
- éventuellement une interface homme machine 206 ;
- un bus de communication 501 reliant le processeur 500 à la mémoire ROM 203, à la mémoire RAM 203, à l'interface homme machine 206 et au module radio 205.

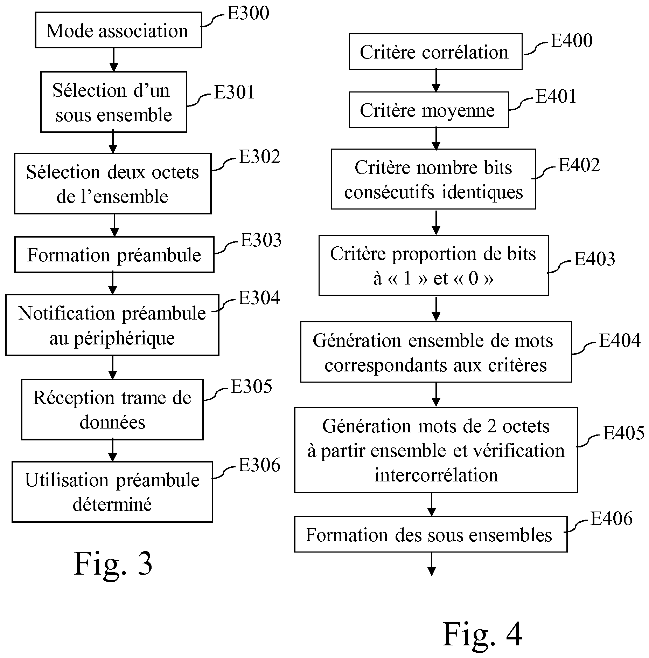

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le dispositif centralisé 10 est mis sous tension, le processeur 200 est capable de lire de la mémoire volatile 203 des instructions et de les exécuter. Ces instructions forment un programme d'ordinateur qui cause la mise en œuvre, par le processeur 200, de tout ou partie du procédé décrit en relation avec la Fig. 3, voire de la Fig. 4.

Tout ou partie du procédé décrit en relation avec la Fig. 3, voire de la Fig. 4 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 4** représente un exemple d'algorithme de sélection d'au moins deux octets parmi un ensemble d'octets pour former un préambule.

Le présent algorithme est exécuté par chaque dispositif centralisé 10.

Le présent algorithme est décrit dans un exemple où il est exécuté par le processeur 200 de chaque dispositif centralisé 10.

A l'étape E300, le processeur 200 détecte la mise du dispositif centralisé 10 dans un mode dit d'association. Le dispositif centralisé 10 est dans une configuration dans laquelle celui-ci détermine un préambule qui sera utilisé par la suite et reconnu par le périphérique 20 associé au dispositif centralisé 10.

La mise de dispositif centralisé 10 dans le mode association est détectée par l'interface homme machine 206 du dispositif centralisé 10 ou d'une interface homme machine déportée. L'interface homme machine 206 est par exemple constituée d'au moins un interrupteur qui est actionné par l'installateur ou l'utilisateur du système.

A l'étape E301, le processeur 200 sélectionne dans la mémoire non volatile un sous-ensemble de mots de 8 bits parmi une pluralité de sous-ensembles de mots de 8 bits.

La sélection est effectuée par un tirage aléatoire, par exemple par un générateur de nombres aléatoires.

A l'étape E302, le processeur 200 sélectionne, dans le sous-ensemble sélectionné, un premier et un second mots de 8 bits.

La sélection est effectuée par un tirage aléatoire, par exemple par un générateur de nombres aléatoires. A l'étape E303, le processeur 200 forme un préambule constitué de la concaténation des deux mots de 8 bits sélectionnés.

A l'étape E304, le processeur 200 commande le transfert d'une trame de données constituée d'un préambule et d'au moins un paquet de données.

Le préambule est, dans le mode association, prédéterminé et connu par chaque dispositif centralisé et chaque périphérique. Le préambule dans le mode association est par exemple constitué d'un mot de 8 bits prédéterminé et répété un nombre prédéterminé de fois. Le paquet de données comporte au moins le préambule formé par la concaténation des deux mots de 8 bits sélectionnés.

A l'étape E305, le processeur 200 détecte la réception, par l'intermédiaire de l'interface radio 205, d'une trame de données transférée en réponse par un périphérique 20. A la réception de cette trame de données, le périphérique 20 est associé au dispositif centralisé 10.

A l'étape E306, le processeur 200 utilise le préambule constitué de la concaténation des deux mots de 8 bits sélectionnés pour le transfert de chaque trame de données au périphérique 20 associé.

Par exemple, la concaténation des deux mots de 8 bits est répétée 625 fois.

La **Fig. 4** représente un exemple d'algorithme de génération de sous-ensembles d'octets pour la génération d'un préambule selon la présente invention.

Le présent algorithme est exécuté par un ordinateur et les sous-groupes de mots bianires sont ensuite mémorisés dans la mémoire non volatile de chaque dispositif centralisé 10 ou exécuté par chaque dispositif centralisé.

A l'étape E400, un critère d'autocorrélation et d'intercorrélation est déterminé. Par exemple les critères d'autocorrélation et d'intercorrélation sont égaux à 6/8.

A l'étape E401, un critère sur la moyenne d'autocorrélation est déterminé. Par exemple, le critère de moyenne d'autocorrélation est égal à 6/8.

A l'étape E402, un critère sur le nombre consécutif de bits d'un mot binaire identiques est déterminé. Par exemple, le nombre consécutif de bits d'un mot binaire identiques est strictement inférieur à 4 ou à 5.

A l'étape E403, un critère sur le nombre de bits au même état logique d'un mot binaire est déterminé. Par exemple le nombre de bits au même état logique d'un mot binaire est égal à quatre bits au niveau 1 et quatre bits au niveau 0 ou 3, 4 ou 5 bits au même niveau.

A l'étape suivante E405, un ensemble de mots binaires correspondant aux critères déterminés aux étapes E400 à E403 est déterminé.

Ainsi, on choisit les mots qui ont de bonnes caractéristiques d'autocorrélation, c'est-à-dire qui présentent un pic d'autocorrélation bien marqué, sans « rebond » de part et d'autre. Par exemple, les mots binaires ayant des pics inférieurs ou égaux à 62% du pic principal sont choisis.

L'autocorrélation est calculée pour chaque mot binaire à l'aide de la formule suivante : un octet est noté $x_n$

$$\text{avec } n \in [\![0, m]\!] \quad m = 7, \; x_n = \begin{cases} -1 \; (bit \; à \; "0") \\ 1 \; (bit \; à \; "1") \end{cases}$$

On calcule l'auto corrélation de la manière suivante :

$$w(k) = \left| \frac{1}{(m+1)} \sum_{n=0}^{k} x_n \cdot x_{|m-k|+n} \right| \quad avec \; k \in [\![0, 2.m]\!]$$

La moyenne d'autocorrélation est calculée pour chaque mot binaire avec la formule suivante en excluant la valeur maximale de w(k) pour k = m :

$$\bar{w} = \frac{1}{2.m} \left[ \sum_{k=0}^{m-1} w(k) + \sum_{k=m+1}^{2.m} w(k) \right]$$

A l'étape suivante E405, pour toutes les combinaisons de deux mots binaires parmi l'ensemble de mots binaires obtenu à l'étape E404, l'intercorrélation est calculée.

L'intercorrélation est calculée à partir de la formule suivante : *soient y(k)et x(k) avec longueur de y(k) notée l(y$_k$)*:

$$l(y_k) = m = 8$$

*l(x$_k$)=n=16 pour la concaténation de deux mots de 8 bits l'intercorrélation est donnée par* :

$$w_k = \left| \frac{1}{(m+n-1)} \sum_j y_j . x_{n-k+j-1} \right|$$

$$j \in [\![ \max(1, k+1-n), \min(k,m) ]\!]$$

$$l(w_k) = m + n - 1$$

La moyenne :

$$\overline{w_k} = \frac{1}{(m+n-2)} \sum_j w_j$$

$$j \in [\![ 0, a-1 ]\!] \cup [\![ a+1, m+n-2 ]\!]$$

avec a = 7 pour y(k), premier mot concaténé
et a = 15 pour y(k), deuxième mot concaténé.

Par exemple, seules les combinaisons qui ont une valeur inférieure à 6/8 sont retenues.

A l'étape suivante E406, sont formés des sous-ensembles de mots binaires.

Chaque sous-ensemble de mots binaires comporte les mots binaires qui concaténés deux à deux respectent les critères susmentionnés.

Les sous-ensembles de mots binaires sont ainsi mémorisés dans la mémoire de chaque dispositif centralisé 10.

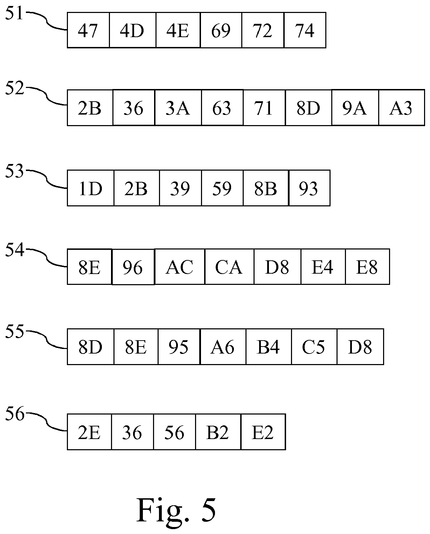

La **Fig. 5** représente les différents sous-ensembles obtenus par l'algorithme de la Fig. 4 selon un premier ensemble de critères.

Dans l'exemple de la Fig. 5, les critères d'autocorrélation et d'intercorrélation sont égaux à 6/8, le critère sur la moyenne d'autocorrélation est égal à 6/8, le nombre consécutif de bits d'un mot binaire identiques est strictement inférieur à 4 et le nombre de bits au même état logique d'un mot binaire est égal à quatre bits au niveau 1 et quatre bits au niveau 0.

Ainsi, six sous-ensembles sont formés.

Un premier sous-ensemble 51 comporte les mots binaires '47 4D 4E 69 72 74' en hexadécimal, un second sous-ensemble 52 comporte les mots binaires '2B 36 3A 63 71 8D 9A A3 ' en hexadécimal, un troisième sous-ensemble 53 comporte les mots binaires '1D 2B 39 59 8B 93 ' en hexadécimal, un quatrième sous-ensemble 54 comporte les mots binaires '8E 96 AC CA D8 E4 E8 ' en hexadécimal, un cinquième sous-ensemble 55 comporte les mots binaires '8D 8E 95 A6 B4 C5 D8 ' en hexadécimal et un sixième sous-ensemble 56 comporte les mots binaires '2E 36 56 B2 E2 ' en hexadécimal.

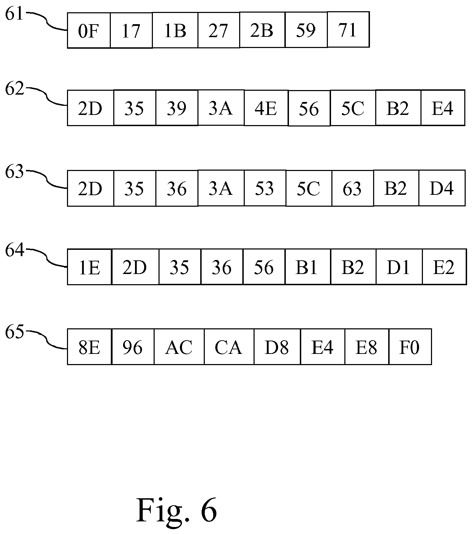

La **Fig. 6** représente les différents sous-ensembles obtenus par l'algorithme de la Fig. 4 selon un second ensemble de critères.

Dans l'exemple de la Fig. 6, les critères sur l'autocorrélation et l'intercorrélation sont égaux à 6/8, le critère sur la moyenne d'autocorrélation est égal à 6/8, le nombre consécutif de bits d'un mot binaire identiques est strictement inférieur à 5 et le nombre de bits au même état logique d'un mot binaire est égal à quatre bits au niveau 1 et quatre bits au niveau 0.

Ainsi, cinq sous-ensembles sont formés.

Un premier sous-ensemble 61 comporte les mots binaires '0F 17 1B 27 2B 59 71 ' en hexadécimal, un second sous-ensemble 62 comporte les mots binaires '2D 35 39 3A 4E 56 5C B2 E4 ' en hexadécimal, un troisième sous-ensemble 63 comporte les mots binaires '2D 35 36 3A 53 5C 63 B2 D4 ' en hexadécimal, un quatrième sous-ensemble 64 comporte les mots binaires '1E 2D 35 36 56 B1 B2 D1 E2 ' en hexadécimal et un cinquième sous-ensemble 65 comporte les mots binaires '8E 96 AC CA D8 E4 E8 F0 ' en hexadécimal.

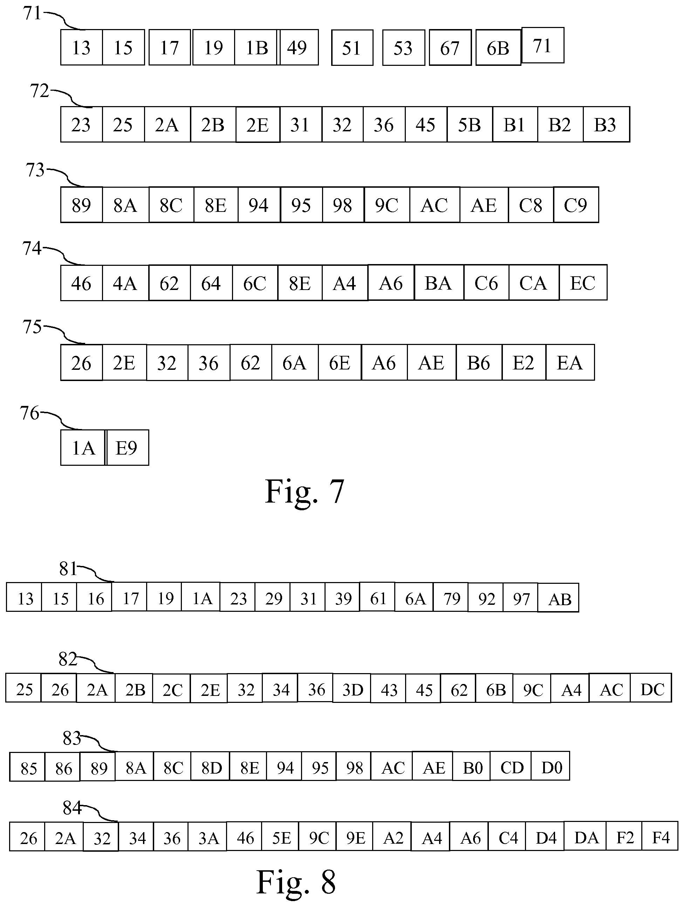

La **Fig. 7** représente les différents sous-ensembles obtenus par l'algorithme de la Fig. 4 selon un troisième ensemble de critères.

Dans l'exemple de la Fig. 7, les critères sur l'autocorrélation et l'intercorrélation sont égaux à 6/8, le critère sur la moyenne d'autocorrélation est égal à 6/8, le nombre consécutif de bits d'un mot binaire identiques est strictement inférieur à 4 et le nombre de bits au même état logique d'un mot binaire est égal à 3, 4 ou 5.

Ainsi six sous-ensembles sont formés.

Un premier sous-ensemble 71 comporte les mots binaires '13 15 17 19 1B 49 51 53 67 6B 71 'en hexadécimal, un second sous-ensemble 72 comporte les mots binaires '23 25 2A 2B 2E 31 32 36 45 5B B1 B2 B3 ' en hexadécimal, un troisième sous-ensemble 73 comporte les mots binaires '89 8A 8C 8E 94 95 98 9C AC AE C8 C9 ' en hexadécimal, un quatrième sous-ensemble 74 comporte les mots binaires '46 4A 62 64 6C 8E A4 A6 BA C6 CA EC ' en hexadécimal, un cinquième sous-ensemble 75 comporte les mots binaires '26 2E 32 36 62 6A 6E A6 AE B6 E2 EA ' en hexadécimal et un sixième sous-ensemble 66 comporte les mots binaires '1A E9 ' en hexadécimal.

La **Fig. 8** représente les différents sous-ensembles obtenus par l'algorithme de la Fig. 4 selon un quatrième ensemble de critères.

Dans l'exemple de la Fig. 6, les critères sur l'autocorrélation et l'intercorrélation sont égaux à 6/8, le critère sur la moyenne d'autocorrélation est égal à 6/8, le nombre consécutif de bits d'un mot binaire identiques est strictement inférieur à 5 et le nombre de bits au même état logique d'un mot binaire est inférieur ou égal à 4.

Ainsi quatre sous-ensembles sont formés.

Un premier sous-ensemble 81 comporte les mots binaires '13 15 16 17 19 1A 23 29 31 39 61 6A 79 92 97 AB ' en hexadécimal, un second sous-ensemble 82 comporte les mots binaires '25 26 2A 2B 2C 2E 32 34 36 3D 43 45 62 6B 9C A4 AC DC 'en hexadécimal, un troisième sous-ensemble 83 comporte les mots binaires '85 86 89 8A 8C 8D 8E 94 95 98 AC AE B0 CD D0 'en hexadécimal et un quatrième sous-ensemble 64 comporte les mots binaires '26 2A 32 34 36 3A 46 5E 9C 9E A2 A4 A6 C4 D4 DA F2 F4' en hexadécimal.

Le préambule peut être constitué d'une répétition de 3 ou plus mots binaires consécutifs.

## Revendications

**1.** Procédé de détermination de mots binaires constituants un premier préambule d'une trame de données émise par un dispositif centralisé vers un périphérique, **caractérisé en ce que** le dispositif centralisé exécute les étapes de :

- détection (E300) de la mise du dispositif centralisé dans un mode dit d'association,
- sélection (E301) aléatoire d'un sous-ensemble de mots binaires parmi une pluralité de sous-ensembles de mots binaires,
- sélection (E302) aléatoire dans le sous-ensemble sélectionné d'un premier mot binaire et d'un second mot binaire différent du premier mot binaire,
- transfert (E304) d'une trame de données constituée d'un second préambule prédéterminé connu par chaque dispositif et d'au moins un paquet de données comportant au moins les premier et second mots binaires sélectionnés,
- réception (E305) d'une trame de données transférée en réponse par un périphérique et association du périphérique au dispositif centralisé,
- utilisation (E306) du premier et du second mots binaires sélectionnés pour former le premier préambule constitué de la concaténation des deux mots binaires sélectionnés pour le transfert de chaque trame de données au périphérique associé.

**2.** Procédé selon la revendication 1, **caractérisé en ce que** les mots binaires de chaque sous ensemble sont déterminés à partir d'un critère sur une autocorrélation et une moyenne d'autocorrélation des mots binaires du sous ensemble, d'un critère sur un nombre maximum de bits consécutifs des mots binaires au même niveau logique, d'un critère sur le nombre de bits au même état logique d'un mot binaire et d'un critère sur l'intercorrélation des mots binaires du sous ensemble.

**3.** Procédé selon la revendication 2, **caractérisé en ce que** un mot binaire est considéré comme satisfaisant au critère sur l'autocorrélation et sur la moyenne d'autocorrélation si l'autocorrélation et la moyenne d'autocorrélation sont inférieures à 6/8.

4. Procédé selon la revendication 3, **caractérisé en ce que** un mot binaire est considéré comme satisfaisant au critère sur l'intercorrélation si l'intercorrélation est inférieure à 6/8.

5. Procédé selon la revendication 3 ou 4, **caractérisé en ce que** le critère sur le nombre consécutif de bits d'un mot binaire identiques est strictement inférieur à 4 ou à 5.

6. Procédé selon l'une quelconque des revendications 3 à 5, **caractérisé en ce que** le critère sur le nombre de bits au même état logique d'un mot binaire est égal à quatre bits au même niveau ou 3, 4 ou 5 bits au même niveau.

7. Dispositif de détermination de mots binaires constituant un premier préambule d'une trame de données émise par un dispositif centralisé vers un périphérique, **caractérisé en ce que** le dispositif centralisé comporte :

- des moyens (200) de détection de la mise du dispositif centralisé dans un mode dit d'association,
- des moyens (200) de sélection aléatoire d'un sous-ensemble de mots binaires parmi une pluralité de sous-ensembles de mots binaires,
- des moyens (200) de sélection aléatoire dans le sous-ensemble sélectionné d'un premier mot binaire et d'un second mot binaire différent du premier mot binaire,
- des moyens (200) de transfert d'une trame de données constituée d'un second préambule prédéterminé connu par chaque dispositif et d'au moins un paquet de données comportant au moins les premier et second mots binaires sélectionnés,
- des moyens (200) de réception d'une trame de données transférée en réponse par un périphérique et association du périphérique au dispositif centralisé,
- des moyens (200) d'utilisation du premier et du second mots binaires sélectionnés pour former le premier préambule constitué de la concaténation des deux mots binaires sélectionnés pour le transfert de chaque trame de données au périphérique associé.

**Patentansprüche**

1. Verfahren zur Bestimmung von Binärwörtern, die eine erste Präambel eines Datenrahmens bilden, der von einer Zentralvorrichtung an ein Peripheriegerät gesendet wird, **dadurch gekennzeichnet, dass** die Zentralvorrichtung die folgenden Schritte ausführt:

- Erfassung (E300) des Versetzens der Zentralvorrichtung in einen sogenannten Assoziierungsmodus,
- Zufallsauswahl (E301) einer Teileinheit von Binärwörtern aus einer Vielzahl von Teileinheiten von Binärwörtern,
- Zufallsauswahl (E302) in der ausgewählten Teileinheit eines ersten Binärworts und eines zweiten Binärworts anders als das erste Binärwort,
- Übertragung (E304) eines Datenrahmens bestehend aus einer zweiten vorbestimmten Präambel, die jeder Vorrichtung bekannt ist, und mindestens einem Datenpaket, das mindestens die ausgewählten ersten und zweiten Binärwörter aufweist,
- Empfang (E305) eines als Antwort von einem Peripheriegerät übertragenen Datenrahmens und Assoziierung des Peripheriegeräts mit der Zentralvorrichtung,
- Verwendung (E306) der ersten und zweiten ausgewählten Binärwörter, um die erste Präambel zu bilden, die aus der Verkettung der zwei ausgewählten Binärwörter besteht, zur Übertragung jedes Datenrahmens an das assoziierte Peripheriegerät.

2. Verfahren nach Anspruch 1, **dadurch gekennzeichnet, dass** die Binärwörter jeder Teileinheit ausgehend von einem Kriterium über eine Autokorrelation und einen Autokorrelationsmittelwert der Binärwörter der Teileinheit, einem Kriterium über eine maximale Anzahl aufeinanderfolgender Bits der Binärwörter auf dem gleichen Logikpegel, einem Kriterium über die Anzahl von Bits im gleichen logischen Zustand eines Binärworts und einem Kriterium über die Interkorrelation der Binärwörter der Teileinheit bestimmt werden.

3. Verfahren nach Anspruch 2, **dadurch gekennzeichnet, dass** ein Binärwort als das Kriterium über die Autokorrelation und den Autokorrelationsmittelwert erfüllend betrachtet wird, wenn die Autokorrelation und der Autokorrelationsmittelwert geringer als 6/8 sind.

**4.** Verfahren nach Anspruch 3, **dadurch gekennzeichnet, dass** ein Binärwort als das Kriterium über die Interkorrelation erfüllend betrachtet wird, wenn die Interkorrelation geringer als 6/8 ist.

**5.** Verfahren nach Anspruch 3 oder 4, **dadurch gekennzeichnet, dass** das Kriterium über die aufeinanderfolgende Anzahl von gleichen Bits eines Binärworts strikt geringer als 4 oder als 5 ist.

**6.** Verfahren nach einem der Ansprüche 3 bis 5, **dadurch gekennzeichnet, dass** das Kriterium über die Anzahl von Bits im gleichen logischen Zustand eines Binärworts gleich vier Bits auf dem gleichen Pegel oder 3, 4 oder 5 Bits auf dem gleichen Pegel ist.

**7.** Vorrichtung zur Bestimmung von Binärwörtern, die eine erste Präambel eines Datenrahmens bilden, der von einer Zentralvorrichtung an ein Peripheriegerät gesendet wird, **dadurch gekennzeichnet, dass** die Zentralvorrichtung aufweist:

- Einrichtungen (200) zur Erfassung des Versetzens der Zentralvorrichtung in einen sogenannten Assoziierungsmodus,
- Einrichtungen (200) zur Zufallsauswahl einer Teileinheit von Binärwörtern aus einer Vielzahl von Teileinheiten von Binärwörtern,
- Einrichtungen (200) zur Zufallsauswahl in der ausgewählten Teileinheit eines ersten Binärworts und eines zweiten Binärworts anders als das erste Binärwort,
- Einrichtungen (200) zur Übertragung eines Datenrahmens, der aus einer zweiten vorbestimmten Präambel, die jeder Vorrichtung bekannt ist, und mindestens einem Datenpaket besteht, das mindestens die ausgewählten ersten und zweiten Binärwörter aufweist,
- Einrichtungen (200) zum Empfang eines Datenrahmens, der als Antwort von einem Peripheriegerät übertragen wird, und Assoziierung des Peripheriegeräts zur Zentralvorrichtung,
- Einrichtungen (200) zur Verwendung der ersten und zweiten ausgewählten Binärwörter, um die erste Präambel zu bilden, die aus der Verkettung der zwei ausgewählten Binärwörter besteht, zur Übertragung jedes Datenrahmens an das assoziierte Peripheriegerät.

**Claims**

**1.** Method for determining binary words making up a first preamble of a data frame sent by a centralized device to a peripheral, **characterized in that** the centralized device executes the steps of:

- detecting (E300) the entry of the centralized device into a mode called the association mode,
- randomly selecting (E301) a subset of binary words from a plurality of subsets of binary words,
- randomly selecting (E302), from the selected subset, a first binary word and a second binary word different from the first binary word,
- transferring (E304) a data frame made up of a predetermined second preamble known by each device and of at least one data packet comprising at least the selected first and second binary words,
- receiving (E305) a data frame transferred in response by a peripheral and associating the peripheral with the centralized device,
- using (E306) the selected first and second binary words to form the first preamble made up of the concatenation of the two selected binary words to transfer each data frame to the associated peripheral.

**2.** Method according to Claim 1, **characterized in that** the binary words of each subset are determined on the basis of a criterion relating to an autocorrelation and an autocorrelation mean of the binary words of the subset, of a criterion related to a maximum number of consecutive bits of the binary words in a given logic level, of a criterion relating to the number of bits in a given logic state of a binary word and of a criterion related to the intercorrelation of the binary words of the subset.

**3.** Method according to Claim 2, **characterized in that** a binary word is considered to meet the criterion relating to autocorrelation and to autocorrelation mean if the autocorrelation and the autocorrelation mean are lower than 6/8.

**4.** Method according to Claim 3, **characterized in that** a binary word is considered to meet the criterion relating to intercorrelation if the intercorrelation is lower than 6/8.

**5.** Method according to Claim 3 or 4, **characterized in that** the criterion relating to the consecutive number of identical bits of a binary word is strictly lower than 4 or than 5.

**6.** Method according to any one of Claims 3 to 5, **characterized in that** the criterion relating to the number of bits in a given logic state of a binary word is equal to four bits in the same level, or 3, 4 or 5 bits in the same level.

**7.** Device for determining binary words making up a first preamble of a data frame sent by a centralized device to a peripheral, **characterized in that** the centralized device comprises:

  - means (200) for detecting the entry of the centralized device into a mode called the association mode,
  - means (200) for randomly selecting a subset of binary words from a plurality of subsets of binary words,
  - means (200) for randomly selecting, from the selected subset, a first binary word and a second binary word different from the first binary word,
  - means (200) for transferring a data frame made up of a predetermined second preamble known by each device and of at least one data packet comprising at least the selected first and second binary words,
  - means (200) for receiving a data frame transferred in response by a peripheral and associating the peripheral with the centralized device,
  - means (200) for using the selected first and second binary words to form the first preamble made up of the concatenation of the two selected binary words to transfer each data frame to the associated peripheral.

30a                                          30b

10a

20a

| Périphérique | Dispositif centralisé |

20b            10b

| Périphérique | Dispositif centralisé |

10c

20c

| Périphérique | Dispositif centralisé |

20d            10d

| Périphérique | Dispositif centralisé |

30c                                            30d

# Fig. 1

205                                      10

| Interface | Proc | 200 |
| IHM | ROM | 202 |
| | RAM | 203 |

206               201

# Fig. 2

```
┌─────────────────────┐
│  Mode association   │─ E300
└─────────────────────┘
          │
          ▼
┌─────────────────────┐
│  Sélection d'un     │─ E301
│  sous ensemble      │
└─────────────────────┘
          │
          ▼
┌─────────────────────┐
│ Sélection deux octets│─ E302
│   de l'ensemble     │
└─────────────────────┘
          │
          ▼
┌─────────────────────┐
│ Formation préambule │─ E303
└─────────────────────┘
          │
          ▼
┌─────────────────────┐
│ Notification préambule│─ E304
│   au périphérique   │
└─────────────────────┘
          │
          ▼
┌─────────────────────┐
│ Réception trame de  │─ E305
│     données         │
└─────────────────────┘
          │
          ▼
┌─────────────────────┐
│ Utilisation préambule│─ E306
│     déterminé       │
└─────────────────────┘
```

## Fig. 3

```
┌─────────────────────┐
│  Critère corrélation │─ E400
└─────────────────────┘
          │
          ▼
┌─────────────────────┐
│  Critère moyenne    │─ E401
└─────────────────────┘
          │
          ▼
┌─────────────────────┐
│ Critère nombre bits │─ E402
│ consécutifs identiques│
└─────────────────────┘
          │
          ▼
┌─────────────────────┐
│ Critère proportion de bits│─ E403
│    à « 1 » et « 0 » │
└─────────────────────┘
          │
          ▼
┌─────────────────────┐
│ Génération ensemble de mots│─ E404
│ correspondants aux critères│
└─────────────────────┘
          │
          ▼
┌─────────────────────┐
│ Génération mots de 2 octets│─ E405
│ à partir ensemble et vérification│
│    intercorrélation │
└─────────────────────┘
          │
          ▼
┌─────────────────────┐
│ Formation des sous ensembles│─ E406
└─────────────────────┘
          │
          ▼
```

## Fig. 4

51 | 47 | 4D | 4E | 69 | 72 | 74 |

52 | 2B | 36 | 3A | 63 | 71 | 8D | 9A | A3 |

53 | 1D | 2B | 39 | 59 | 8B | 93 |

54 | 8E | 96 | AC | CA | D8 | E4 | E8 |

55 | 8D | 8E | 95 | A6 | B4 | C5 | D8 |

56 | 2E | 36 | 56 | B2 | E2 |

# Fig. 5

61 | 0F | 17 | 1B | 27 | 2B | 59 | 71 |

62 | 2D | 35 | 39 | 3A | 4E | 56 | 5C | B2 | E4 |

63 | 2D | 35 | 36 | 3A | 53 | 5C | 63 | B2 | D4 |

64 | 1E | 2D | 35 | 36 | 56 | B1 | B2 | D1 | E2 |

65 | 8E | 96 | AC | CA | D8 | E4 | E8 | F0 |

# Fig. 6

71

| 13 | 15 | 17 | 19 | 1B | 49 | 51 | 53 | 67 | 6B | 71 |

72

| 23 | 25 | 2A | 2B | 2E | 31 | 32 | 36 | 45 | 5B | B1 | B2 | B3 |

73

| 89 | 8A | 8C | 8E | 94 | 95 | 98 | 9C | AC | AE | C8 | C9 |

74

| 46 | 4A | 62 | 64 | 6C | 8E | A4 | A6 | BA | C6 | CA | EC |

75

| 26 | 2E | 32 | 36 | 62 | 6A | 6E | A6 | AE | B6 | E2 | EA |

76

| 1A | E9 |

## Fig. 7

81

| 13 | 15 | 16 | 17 | 19 | 1A | 23 | 29 | 31 | 39 | 61 | 6A | 79 | 92 | 97 | AB |

82

| 25 | 26 | 2A | 2B | 2C | 2E | 32 | 34 | 36 | 3D | 43 | 45 | 62 | 6B | 9C | A4 | AC | DC |

83

| 85 | 86 | 89 | 8A | 8C | 8D | 8E | 94 | 95 | 98 | AC | AE | B0 | CD | D0 |

84

| 26 | 2A | 32 | 34 | 36 | 3A | 46 | 5E | 9C | 9E | A2 | A4 | A6 | C4 | D4 | DA | F2 | F4 |

## Fig. 8

## RÉFÉRENCES CITÉES DANS LA DESCRIPTION

**Documents brevets cités dans la description**

- EP 2043400 A
- US 9049729 B